# FASCICULE DE BREVET EUROPEEN

(11) **EP 2 630 421 B1**
(45) Date de publication et mention de la délivrance du brevet: **27.07.2016**
(21) Numéro de dépôt: 11779747.2
(22) Date de dépôt: 20.10.2011
(51) Int. Cl.: F25B 35/04, F24H 1/18, F25B 17/08, F25D 5/00, F28D 20/00

(54) **SYSTÈME THERMOCHIMIQUE À ENVELOPPE EN MATÉRIAU COMPOSITE**
THERMOCHEMISCHES SYSTEM MIT EINEM GEHÄUSE AUS VERBUNDWERKSTOFF
THERMOCHEMICAL SYSTEM HAVING A HOUSING MADE OF A COMPOSITE MATERIAL

(30) Priorité: 20.10.2010 FR 1004120
(43) Date de publication de la demande: 28.08.2013
(73) Titulaire: Coldway, 66380 Paris (FR)
(72) Inventeur: RIGAUD, Laurent, F-66570 Saint Nazaire (FR); KINDBEITER, Francis, F-66200 Corneilla Del Vercol (FR); DUTRUY, Laurent, F-66180 Villeneuve de la Raho (FR)
(74) Mandataire: Louiset, Raphaël
(86) Numéro de dépôt international: PCT/FR2011/000564
(87) Numéro de publication internationale: WO 2012/052633

(56) Documents cités:
- WO-A2-03/071197
- FR-A- 887 995
- FR-A1- 2 803 222
- FR-A1- 2 809 103
- FR-A1- 2 873 793
- LUO L ET AL: "COMPORTEMENT TRANSITOIRE D'UNE MACHINE FRIGORIFIQUE A ADSORPTION. ETUDE EXPERIMENTALE DU SYSTEME ALCOOL/CHARBON ACTIF", REVUE GENERALE DE THERMIQUE, ELSEVIER EDITIONS SCIENTIFIQUES ET MEDICALES,PARIS, FR, vol. 36, no. 3, 1 mars 1997 (1997-03-01), pages 159-169, XP000690836, ISSN: 0035-3159, DOI: 10.1016/S0035-3159(97)88156-1

## Description

La présente invention concerne des perfectionnements aux systèmes thermochimiques du type destinés à être notamment utilisés dans des appareils de réfrigération et/ou de chauffage, ainsi que dans des systèmes de stockage de gaz sous forme de sels.

On connaît de tels systèmes qui exploitent les propriétés d'une réaction thermochimique réversible et fortement exothermique au cours de laquelle un produit réactif, tel que des sels et notamment du chlorure de calcium ou du chlorure de baryum, absorbe un gaz approprié, tel que notamment de l'ammoniac. Le caractère réversible de cette réaction permet, une fois celle-ci terminée, de récupérer le gaz initial par chauffage des sels, de sorte que le cycle peut se répéter.

Cette propriété a été exploitée dans des systèmes de production de froid dans lesquels le système thermochimique est mis en communication contrôlée avec un réservoir contenant le gaz sous phase liquide. Lorsque les deux enceintes sont mises en communication, le gaz liquide contenu dans le réservoir se vaporise, ce qui absorbe une certaine quantité de chaleur, si bien que le réservoir se refroidit, et ce gaz est absorbé par le produit réactif générant ainsi la susdite réaction chimique, si bien que le réacteur est la source d'un dégagement de chaleur. Une fois la réaction terminée, si l'on réchauffe le produit contenu dans le réacteur, on libère le gaz absorbé dans le produit réactif et celui-ci se condense alors dans le réservoir.

On peut également utiliser le présent système pour assurer le stockage du gaz mis en oeuvre dans la susdite réaction thermochimique.

On comprend que, en raison des pressions élevées mises en jeu lors de la réaction thermochimique, les réacteurs aptes à être le siège d'une telle réaction doivent posséder une résistance mécanique élevée, et c'est pourquoi ils sont réalisés dans des matériaux résistants tels que notamment l'acier ou préférablement l'acier inoxydable.

Une telle constitution présente de multiples inconvénients. Un premier inconvénient est de ne permettre la réalisation que de réacteurs dont le poids est important ce qui rend l'utilisation de ces techniques non compétitive dans les domaines où la légèreté de l'appareillage s'impose.

Par ailleurs ces réacteurs sont réalisés à partir de matériaux coûteux qui imposent de plus de faire appel pour leur réalisation à la fois à une bonne technicité et à un matériel spécifique mis en oeuvre par des spécialistes, ce qui est de nature à grever de façon conséquente le prix de revient du système.

Enfin, dans de tels réacteurs, si l'on souhaite assurer un chauffage à partir de la périphérie de ces derniers, on est contraint de faire appel à un manchon chauffant externe. Une telle disposition n'est pas satisfaisante à l'usage dans la mesure où le manchon chauffant externe est exposé en cours d'usage du réacteur à diverses causes d'agression extérieures susceptibles de le détériorer. De plus, une disposition des moyens de chauffage à l'intérieur même du réacteur, avec le produit réactif, présente également l'inconvénient de risquer leur détérioration au moment de leur mise en place ou simplement en cours d'usage. Des systèmes thermochimiques tels que décrits ci-dessus sont connus du document de brevet FR 887 995 et de la publication "Comportement transitoire d'une machine frigorifique à adsorption. Étude expérimentale du système alcool/charbon actif", parue le 1er Mars 1997 dans la Revue Générale de Thermique, Volume 36, page 159 à 169, aux éditions scientifiques et médicales Elsevier, à Paris, France.

La présente invention a pour but de remédier à ces inconvénients en proposant un système thermochimique qui allie à la fois un faible poids et une bonne facilité de fabrication et qui, par ailleurs, permet d'intégrer totalement les moyens de chauffage à l'enceinte même du réacteur évitant ainsi tout risque de détérioration de ces derniers.

La présente invention a ainsi pour objet un système thermochimique du type comportant un réacteur, ou enceinte de stockage d'un produit réactif solide apte à absorber un gaz, le produit réactif et le gaz étant tels que, lorsqu'ils sont mis en présence l'un de l'autre, ils sont l'objet d'une réaction chimique ayant pour effet l'absorption du gaz par le produit réactif et ils sont l'objet d'une réaction chimique inverse de désorption du gaz absorbé par le produit réactif sous l'action des moyens de chauffage aptes à agir sur celui-ci lorsqu'il a absorbé du gaz, caractérisé en ce que le réacteur est constitué d'une enveloppe externe en matériau composite comprenant une résine thermodurcissable ou thermoplastique et des fibres, cette enveloppe externe conférant au réacteur une bonne résistance mécanique, et renfermant une enveloppe interne étanche contenant le produit réactif, les moyens de chauffage étant au moins disposés entre les deux enceintes.

Préférentiellement les moyens de chauffage seront disposés sur la surface externe de l'enveloppe interne. Ils pourront être constitués d'au moins une résistance électrique enroulée de façon sensiblement hélicoïdale sur la surface externe de l'enveloppe interne. Ils pourront également être constitués d'un tissu chauffant.

Le réacteur du système thermochimique suivant l'invention pourra préférentiellement être de forme cylindrique. Il pourra comporter des moyens de diffusion du gaz à l'intérieur celui-ci.

Ces moyens de diffusion pourront être constitués d'un diffuseur disposé au coeur du produit réactif, sensiblement suivant l'axe longitudinal du réacteur.

Les moyens de diffusion peuvent également être disposés sur la surface interne de l'enveloppe interne.

Un tel système thermochimique est particulièrement intéressant pour fournir du froid et/ou de la chaleur et, à cet effet, il comportera des moyens de mise en communication contrôlée du réacteur avec un réservoir, contenant ledit gaz sous forme liquéfiée.

On décrira ci-après, à titre d'exemple non limitatif, une forme d'exécution de la présente invention, en référence au dessin annexé sur lequel :
- la figure 1 est une vue schématique avec coupe partielle du réacteur, illustrant le principe de fonctionnement d'un système thermochimique suivant l'invention dans une application de type dit « ouvert »,
- la figure 2 est une vue en coupe longitudinale et diamétrale d'un réacteur mis en oeuvre dans le système thermochimique suivant l'invention,
- la figure 3 est une vue schématique en coupe transversale et diamétrale d'un mode de réalisation d'un réacteur suivant l'invention,
- la figure 4 est une vue schématique illustrant un mode de fabrication d'un réacteur mis en oeuvre dans un système thermochimique suivant l'invention,
- la figure 5 est une vue schématique avec coupe partielle du réacteur, illustrant le principe de fonctionnement d'un système thermochimique suivant l'invention dans une application de type dit « fermé »,
- la figure 6 est une vue schématique en perspective et coupe partielle d'un second mode de réalisation d'un réacteur mis en oeuvre dans le système thermochimique suivant l'invention,
- la figure 7 est une vue en coupe longitudinale et diamétrale d'un réacteur illustrant un mode de diffusion du gaz à partir de la surface interne de l'enveloppe interne.

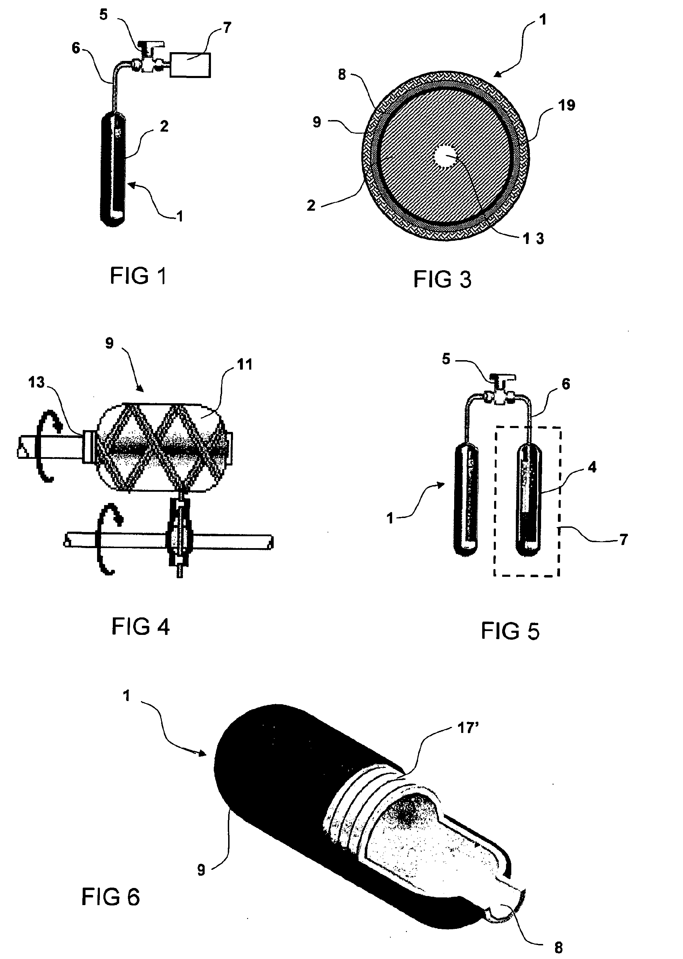

Le système thermochimique qui est représenté de façon schématique sur la figure 1, comprend essentiellement un réacteur 1 qui contient un produit réactif 2 et qui est en communication par une conduite 6, sous le contrôle d'une vanne de commande 5, avec des moyens d'utilisation extérieurs 7. Ainsi qu'expliqué ci-après et de façon connue, le produit réactif et le gaz spécifique sont tels que le produit réactif est apte, par une réaction thermochimique exothermique, à absorber le gaz et à le restituer ensuite, par une réaction thermochimique inverse, lorsque l'on chauffe le produit réactif 2.

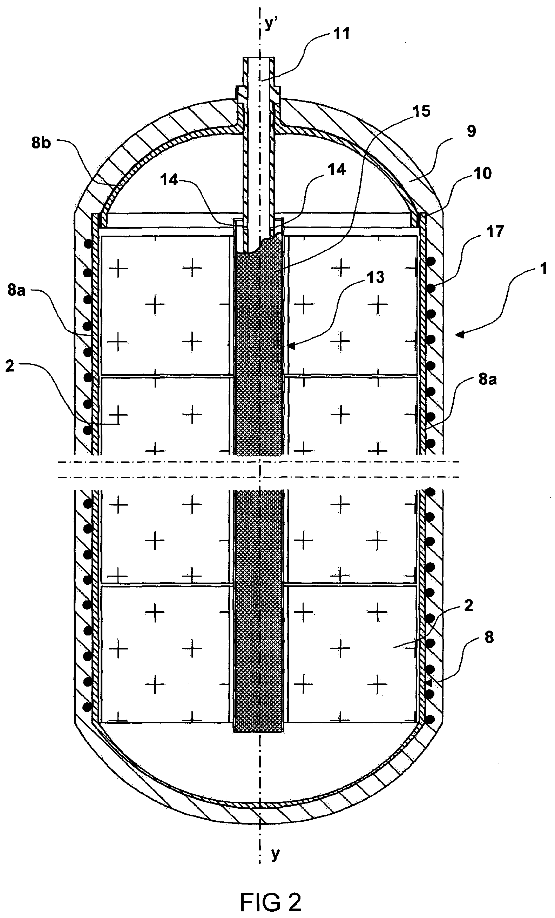

Dans le mode de mise en oeuvre de la présente invention qui est représenté sur la figure 2 le corps du réacteur 1 est constitué de deux enveloppes, à savoir une enveloppe interne 8, ou "liner", et une enveloppe externe 9.

L'enveloppe interne 8 est elle même formée de deux éléments métalliques, notamment en acier inoxydable, un corps cylindrique 8a de faible épaisseur, de l'ordre de 1 mm, dont le fond est de forme préférentiellement hémisphérique et qui est ouvert à sa partie supérieure de façon à recevoir une tête hémisphérique 8b qui est fixée sur le corps par exemple par un cordon de soudure 10 de façon à lui assurer une bonne étanchéité aussi bien à l'égard des gaz qu'à celui des liquides.

L'enveloppe interne 8 reçoit le produit réactif 2, qui est disposé à l'intérieur de celle-ci préférentiellement sous forme de galettes qui son empilées les unes sur les autres.

La tête 8b est traversée suivant l'axe longitudinal yy' du réservoir 1 par un conduit d'alimentation en gaz 11 qui est fixé sur celle-ci et qui se prolonge à l'intérieur du réacteur 1 sensiblement sur toute la longueur de celui-ci par un diffuseur 13. Ce diffuseur qui traverse le produit réactif 2 est destiné à permettre une distribution régulière du gaz dans le réacteur 1 nécessaire à la réalisation de la réaction thermochimique directe ainsi que la sortie du gaz de celui-ci lors de la réaction thermochimique inverse activée par le chauffage du produit réactif 2.

Le diffuseur 13 permet également d'assurer la diffusion du gaz dans le produit réactif suivant un trajet radial. On a constaté en effet que la perméabilité du produit réactif 2 était optimale dans une telle direction, dans la mesure où celle-ci est perpendiculaire à la direction du compactage qui est réalisé axialement.

Pour constituer le diffuseur 13 le conduit 11 est percé de trous 14 dans la zone par laquelle il traverse le matériau réactif 2 et est entouré d'un ou plusieurs treillis métalliques filtrants 15.

Suivant l'invention et ainsi que représenté sur la figure 2, afin d'apporter au produit réactif la chaleur qui lui est nécessaire pour assurer l'activation de la réaction thermochimique inverse, on enroule sur l'enveloppe interne 8 des éléments de chauffage qui peuvent être constitués d'une résistance électrique 17 ainsi que représenté sur la figure 2 ou d'un tissu chauffant 19 ainsi que représenté sur la figure 3.

On vient ensuite former l'enveloppe externe 9 sur l'enveloppe interne 8. A cet effet, ainsi que représenté de façon schématique sur la figure 4, on peut utiliser l'enveloppe interne en tant que mandrin et, après mise en rotation de celle-ci, venir dérouler sur sa surface externe des fibres, telles que par exemple des fibres de carbone, des fibres de verre ou des fibres en matière de synthèse telle que notamment du kevlar, de façon à former une sorte d'écheveau qui sera ensuite, ou simultanément au déroulement, noyé dans une résine thermodurcissable ou thermoplastique telle que, par exemple, une résine époxy, une résine polyester ou polyamide.

La fonction de l'enveloppe composite externe 9 est de conférer au réacteur 1 une bonne résistance mécanique et, à cet effet, l'homme du métier saura choisir la nature des fibres et celle de la résine à utiliser ainsi que l'épaisseur à donner aux parois de l'enveloppe.

La présente invention permet ainsi d'obtenir un réacteur qui, non seulement possède les caractéristiques de légèreté propres aux containers en matériau composite mais qui, de plus, intègre ses propres moyens de chauffage. On évite ainsi les risques de détérioration des éléments de chauffage externes, tels que les manchons chauffants, qui ne sont pas protégés contre les agressions diverses extérieures ou des éléments de chauffage internes qui sont situés dans l'enceinte du réacteur et qui peuvent être détériorés soit lors de la mise en place du produit réactif soit en cours d'usage du réacteur.

De façon connue le produit réactif 2 qui est contenu dans le réacteur 1 est, par exemple, du chlorure de calcium qui a été préférentiellement mélangé à des granulats inertes, par exemple constitués de graphite naturel expansé (GNE) de façon à augmenter sa perméabilité et favoriser ainsi la diffusion du gaz au sein de celui-ci. Une fois le mélange effectué, il est compacté préférentiellement dans le sens longitudinal yy' du réacteur 1.

Le système thermochimique suivant l'invention qui est représenté sur la figure 1 peut être utilisé pour assurer plusieurs fonctions débouchant sur des applications techniques diverses.

Une application particulièrement intéressante est celle dans laquelle le système thermochimique est utilisé pour la production de chaleur et de froid. Dans cette application, connue en elle-même, qui est représentée sur la figure 5, les moyens d'utilisation extérieurs 7 sont constitués d'un réservoir 4 qui contient un gaz liquide apte à réagir avec le produit réactif et qui est stocké en phase liquide.

De façon connue le fonctionnement du système s'établit ainsi que décrit ci-après. A l'ouverture de la vanne de commande 5 le gaz stocké sous phase liquide dans le réservoir 4 se vaporise, absorbant ainsi de la chaleur, si bien que le réservoir 4 se refroidit, et le gaz est distribué par le diffuseur 13 au sein du produit réactif 2 qui le capte suivant la réaction thermochimique spécifique propre au produit réactif et au gaz utilisé ; cette réaction est exothermique, si bien que le réacteur 1 s'échauffe. La réaction se poursuit tant qu'il reste du gaz dans le réservoir 4 et que le produit réactif 2 n'est pas saturé. Si, par la suite, on effectue un apport de chaleur au réacteur 1 au moyen de la résistance électrique 17 ou du tissu chauffant 19, le produit réactif 2 désorbe le gaz qui retourne au réservoir 4 où il se condense.

A titre d'exemple, dans le cas d'un produit réactif constitué de chlorure de calcium et d'un gaz constitué d'ammoniac, cette réaction thermochimique est la suivante :

Ca (NH₃) ₆Cl₂<->Ca (NH₃) ₂Cl₂+4 (NH₃) -δH_{R}

On comprend qu'un tel système est particulièrement intéressant dans la mesure où il permet de stocker de façon potentielle à la fois de la chaleur (échauffement du réacteur 1) et du froid (refroidissement du réservoir 4) et ceci avec un poids et sous un encombrement faible.

Dans un autre mode de mise en oeuvre de l'invention qui est représenté sur la figure 6, l'enveloppe interne 8 est constituée d'un matériau de synthèse et sa surface périphérique externe est creusée d'une rainure hélicoïdale dans laquelle on dispose une résistance électrique 17' qui permet, ainsi qu'exposé précédemment, d'activer la réaction thermochimique inverse.

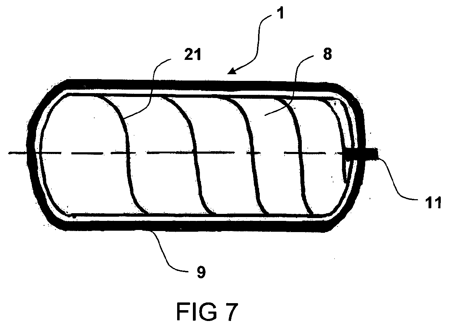

Dans un autre mode de mise en oeuvre de l'invention, la diffusion du gaz à l'intérieur du produit réactif 2 est assurée par l'enveloppe interne 8. A cet effet, ainsi que représenté sur la figure 7, la surface interne de l'enveloppe interne 8 est creusée d'une rainure hélicoïdale 21 par laquelle le gaz est amené en contact avec la surface périphérique externe du produit réactif 2. Afin d'améliorer la diffusion du gaz dans celui-ci on peut bien entendu prévoir plusieurs rainures hélicoïdales 21 intercalées entre elles.

Dans une variante de mise en oeuvre de l'invention on pourra faire appel à des moyens de chauffage complémentaires, ou moyens de chauffage annexes, qui seront disposés au niveau de la partie centrale du réacteur au voisinage de son axe longitudinal xx'. Ces moyens de chauffage annexes pourront préférentiellement être disposés autour du diffuseur 13. Il pourront par exemple être constitués d'une cartouche chauffante qui sera enfilée sur le diffuseur 13.

## Revendications

1. Système thermochimique du type comportant un réacteur (1), ou enceinte de stockage d'un produit réactif solide apte à absorber un gaz, le produit réactif (2) et le gaz étant tels que, lorsqu'ils sont mis en présente l'un de l'autre, ils sont l'objet d'une réaction chimique ayant pour effet l'absorption du gaz par le produit réactif (2) et ils sont l'objet d'une réaction chimique inverse de désorption du gaz absorbé par le produit réactif sous l'action de moyens de chauffage (17, 17') appliqués à celui-ci lorsqu'il a absorbé du gaz, **caractérisé en ce que** le réacteur (1) est constitué d'une enveloppe externe (9) en matériau composite comprenant une résine thermodurcissable ou thermoplastique et des fibres, cette enveloppe externe (9) conférant au réacteur (1) une bonne résistance mécanique, et renfermant une enveloppe interne étanche (8) contenant le produit réactif (2), les moyens de chauffage (17, 17', 19) étant au moins disposés entre les deux enceintes (8,9).

2. Système thermochimique suivant la revendication 1 **caractérisé en ce que** l'enveloppe interne (8) est métallique et notamment constituée d'acier inoxydable.

3. Système thermochimique suivant l'une des revendications 1 ou 2 **caractérisé en ce que** l'enveloppe interne (8) est constituée de deux éléments, à savoir un corps (8a) ouvert à sa partie supérieure de façon à recevoir une tête (8b) après l'introduction dans le corps (8a) du produit réactif (2), cette tête (8b) étant fixée de façon étanche sur le corps (8a).

4. Système thermochimique suivant l'une des revendications précédentes **caractérisé en ce que** les moyens de chauffage (17,17',19) sont disposés sur la surface externe de l'enveloppe interne (8).

5. Système thermochimique suivant la revendication 4 **caractérisé en ce que** les moyens de chauffage sont constitués d'au moins une résistance électrique (17) enroulée de façon sensiblement hélicoïdale sur la surface externe de l'enveloppe interne (8).

6. Système thermochimique suivant l'une des revendications 1 à 4 **caractérisé en ce que** les moyens de chauffage sont constitués d'un tissu chauffant (17').

7. Système thermochimique suivant la revendication 1 **caractérisé en ce que** l'enveloppe interne (8) est constituée d'un matériau de synthèse et sa surface périphérique externe est creusée d'une rainure hélicoïdale dans laquelle est disposée une résistance électrique de chauffage.

8. Système thermochimique suivant l'une des revendications précédentes **caractérisé en ce que** le réacteur (1) est de forme cylindrique.

9. Système thermochimique suivant l'une des revendications précédentes **caractérisé en ce que** le réacteur (1) est pourvu de moyens de diffusion du gaz dans celui-ci.

10. Système thermochimique suivant la revendication 9 **caractérisé en ce que** les moyens de diffusion sont constitués d'un diffuseur (13) disposé au coeur du produit réactif (2), sensiblement suivant l'axe longitudinal (yy') du réacteur (1).

11. Système thermochimique suivant la revendication 9 **caractérisé en ce que** les moyens de diffusion (21) sont prévus sur la surface interne de l'enveloppe interne (8).

12. Système thermochimique suivant l'une des revendications précédentes **caractérisé en ce qu'**il comporte des moyens de chauffage annexes disposés au voisinage de la partie centrale du réacteur (1).

13. Système thermochimique suivant la revendication 12 **caractérisé en ce que** les moyens de chauffage annexes sont disposés autour du diffuseur (13).

14. Système thermochimique suivant l'une des revendications précédentes **caractérisé en ce qu'**il comporte des moyens de mise en communication contrôlée du réacteur (1) avec un réservoir (4), contenant ledit gaz sous forme liquéfiée.

## Patentansprüche

1. Thermochemisches System des Typs mit einem Reaktor (1) oder einem Lagergehäuse für ein Feststoff-Reaktionsprodukt, das ein Gas absorbieren kann, wobei das Reaktionsprodukt (2) und das Gas derart sind, dass sie dann, wenn sie zueinander gebracht werden, Gegenstand einer chemischen Reaktion sind, die die Absorption des Gases durch das Reaktionsprodukt (2) zur Wirkung hat, und sie der Gegenstand einer umgekehrten chemischen Desorptionsreaktion des durch das Reaktionsprodukt absorbierten Gases unter der Wirkung von Heizmitteln (17, 17') sind, die darauf angewendet werden, wenn es Gas absorbiert hat, **dadurch gekennzeichnet, dass** der Reaktor (1) aus einer äußeren Hülle (9) aus einem Verbundmaterial mit einem wärmehärtbaren oder thermoplastischen Harz und Fasern gebildet ist, wobei diese äußere Hülle (9) dem Reaktor (1) eine gute mechanische Beständigkeit verleiht und eine dichte innere Hülle (8) umschließt, die das Reaktionsprodukt (2) enthält, wobei die Heizmittel (17, 17', 19) zumindest zwischen den zwei Gehäusen (8, 9) angeordnet sind.

2. Thermochemisches System nach Anspruch 1, **dadurch gekennzeichnet, dass** die innere Hülle (8) metallisch und insbesondere aus Edelstahl gebildet ist.

3. Thermochemisches System nach einem der Ansprüche 1 oder 2, **dadurch gekennzeichnet, dass** die innere Hülle (8) aus zwei Elementen gebildet ist, nämlich einem Körper (8a), der an seinem oberen Abschnitt offen ist, um nach der Einführung des Reaktionsprodukts (2) in den Körper (8a) einen Kopf (8b) aufzunehmen, wobei dieser Kopf (8b) dicht am Körper (8a) befestigt wird.

4. Thermochemisches System nach einem der vorangehenden Ansprüche, **dadurch gekennzeichnet, dass** die Heizmittel (17, 17', 19) an der äußeren Oberfläche der inneren Hülle (8) angeordnet sind.

5. Thermochemisches System nach Anspruch 4, **dadurch gekennzeichnet, dass** die Heizmittel aus mindestens einem elektrischen Widerstand (17) gebildet sind, der im Wesentlichen schraubenförmig auf die äußere Oberfläche der inneren Hülle (8) gewickelt ist.

6. Thermochemisches System nach einem der Ansprüche 1 bis 4, **dadurch gekennzeichnet, dass** die Heizmittel aus einem Heizgewebe (17') gebildet sind.

7. Thermochemisches System nach Anspruch 1, **dadurch gekennzeichnet, dass** die innere Hülle (8) aus einem Synthesematerial gebildet ist und ihre äußere Umfangsoberfläche mit einer schraubenförmigen Nut ausgehöhlt ist, in der ein elektrischer Heizwiderstand angeordnet ist.

8. Thermochemisches System nach einem der vorangehenden Ansprüche, **dadurch gekennzeichnet, dass** der Reaktor (1) eine zylindrische Form aufweist.

9. Thermochemisches System nach einem der vorangehenden Ansprüche, **dadurch gekennzeichnet, dass** der Reaktor (1) mit Mitteln zur Diffusion des Gases in diesem versehen ist.

10. Thermochemisches System nach Anspruch 9, **dadurch gekennzeichnet, dass** die Mittel zur Diffusion aus einem Diffusor (13) gebildet sind, der im Inneren des Reaktionsprodukts (2) im Wesentlichen entlang der Längsachse (yy') des Reaktors (1) angeordnet ist.

11. Thermochemisches System nach Anspruch 9, **dadurch gekennzeichnet, dass** die Diffusionsmittel (21) auf der inneren Oberfläche der inneren Hülle (8) vorgesehen sind.

12. Thermochemisches System nach einem der vorangehenden Ansprüche, **dadurch gekennzeichnet, dass** es zugehörige Heizmittel umfasst, die in der Nähe des zentralen Abschnitts des Reaktors (1) angeordnet sind.

13. Thermochemisches System nach Anspruch 12, **dadurch gekennzeichnet, dass** die zugehörigen Heizmittel um den Diffusor (13) angeordnet sind.

14. Thermochemisches System nach einem der vorangehenden Ansprüche, **dadurch gekennzeichnet, dass** es Mittel zur gesteuerten Verbindung des Reaktors (1) mit einem Behälter (4) umfasst, der das Gas in verflüssigter Form enthält.

## Claims

1. Thermochemical system of the type comprising a reactor (1), or chamber for storing a solid reactive product capable of absorbing a gas, the reactive product (2) and the gas being such that, when they are brought into contact with one another, they are subjected to a chemical reaction that results in the absorption of the gas by the reactive product (2) and they are subjected to a reverse chemical reaction of desorption of the gas absorbed by the reactive product under the action of heating means (17, 17') applied thereto when it has absorbed gas, **characterized in that** the reactor (1) consists of an outer shell (9) made of composite material comprising a thermosetting or thermoplastic resin and fibres, this outer shell (9) giving the reactor (1) a good mechanical strength, and containing a leaktight inner shell (8) that contains the reactive product (2), the heating means (17, 17', 19) being positioned at least between the two chambers (8, 9).

2. Thermochemical system according to Claim 1, **characterized in that** the inner shell (8) is metallic and in particular consists of stainless steel.

3. Thermochemical system according to either of Claims 1 and 2, **characterized in that** the inner shell (8) consists of two components, namely a body (8a) that is open in its upper portion so as to receive a head (8b) after introducing the reactive product (2) into the body (8a), this head (8b) being fastened in a leaktight manner to the body (8a).

4. Thermochemical system according to one of the preceding claims, **characterized in that** the heating means (17, 17', 19) are positioned on the outer surface of the inner shell (8).

5. Thermochemical system according to Claim 4, **characterized in that** the heating means consist of at least one electrical resistor (17) wound substantially helically around the outer surface of the inner shell (8).

6. Thermochemical system according to one of Claims 1 to 4, **characterized in that** the heating means consist of a heating fabric (17').

7. Thermochemical system according to Claim 1, **characterized in that** the inner shell (8) consists of a synthetic material and the outer peripheral surface thereof has a helical groove recessed therein, in which groove an electrical heating resistor is positioned.

8. Thermochemical system according to one of the preceding claims, **characterized in that** the reactor (1) is of cylindrical shape.

9. Thermochemical system according to one of the preceding claims, **characterized in that** the reactor (1) is provided with means for diffusion of the gas therein.

10. Thermochemical system according to Claim 9, **characterized in that** the diffusion means consist of a diffuser (13) positioned in the middle of the reactive product (2), substantially along the longitudinal axis (yy') of the reactor (1).

11. Thermochemical system according to Claim 9, **characterized in that** the diffusion means (21) are provided on the inner surface of the inner shell (8).

12. Thermochemical system according to one of the preceding claims, **characterized in that** it comprises additional heating means positioned in the vicinity of the central portion of the reactor (1).

13. Thermochemical system according to Claim 12, **characterized in that** the additional heating means are positioned around the diffuser (13).

14. Thermochemical system according to one of the preceding claims, **characterized in that** it comprises means for placing the reactor (1) in controlled communication with a tank (4), containing said gas in liquefied form.
